# EUROPEAN PATENT SPECIFICATION

(11) **EP 3 086 508 B1**
(45) Date of publication and mention of the grant of the patent: **26.09.2018**
(21) Application number: 13900660.5
(22) Date of filing: 31.12.2013
(51) Int. Cl.: H04L 12/24

(54) **FIBER-TO-THE-DISTRIBUTION POINT DEVICE AND COMMUNICATION METHOD THEREFOR**
FASER-ZU-VERTEILUNGSPUNKT-VORRICHTUNG UND KOMMUNIKATIONSVERFAHREN DAFÜR
DISPOSITIF À FIBRE RELIÉE AU POINT DE DISTRIBUTION ET PROCÉDÉ DE COMMUNICATION ASSOCIÉ

(43) Date of publication of application: 26.10.2016
(73) Proprietor: Huawei Technologies Co., Ltd., Longgang District Shenzhen, Guangdong 518129 (CN)
(72) Inventor: WANG, Wenming, Shenzhen Guangdong 518129 (CN); LUO, Yong, Shenzhen Guangdong 518129 (CN); LI, Hongyu, Shenzhen Guangdong 518129 (CN)
(74) Representative: Thun, Clemens
(86) International application number: PCT/CN2013/091034
(87) International publication number: WO 2015/100585

(56) References cited:
- EP-A1- 2 106 064
- WO-A1-2012/139453
- CN-A- 101 043 275
- CN-A- 101 594 250
- CN-A- 102 480 321
- US-A1- 2008 002 718
- US-A1- 2009 024 725
- US-A1- 2009 180 777

## Description

### TECHNICAL FIELD

Embodiments of the present invention relate to the field of network communications, and in particular, to a fiber-to-the-distribution point device and a communication method thereof.

### BACKGROUND

FTTdp (Fiber-to-the-Distribution Point, fiber-to-the-distribution point) is a hybrid fiber/copper wire network communication solution. In some regions such as Europe, fiber to the home is a difficult problem. Fiber generally can only reach a place relatively close to an end user, for example, a street cabinet, a corridor, and a resident doorway. These places are referred to as fiber distribution points. A twisted pair (for example, a copper wire) from a fiber distribution point to the home of a user is already placed early, and an FTTdp CO (Central Office, central office) device is placed at the fiber distribution point to perform switching from the fiber to the twisted pair. One FTTdp CO device may provide an access service for a single user or multiple users. In the twisted pair, a VDSL2+ (Very-high-bit-rate Digital Subscriber Loop, very-high-bit-rate digital subscriber loop) or g.fast technology is used, so as to ensure that access bandwidth of an end user can reach 100 Mbps or even 2 Gbps.

In a typical FTTdp access scenario, the FTTdp CO device is connected to an OLT (Optical Line Terminal, optical line terminal) device by using a PON (Passive Optical Network, passive optical network), FTTdp CPE (Customer Premise Equipment, customer premise equipment) is connected to the FTTdp CO device by using the twisted pair, and an HG (Home Gateway, home gateway) is connected to the FTTdp CPE by using a network cable. In some scenarios, an HG function may be integrated into the FTTdp CPE. After receiving an Ethernet packet transmitted by the PON network, the FTTdp CO device modulates the packet to the twisted pair by means of the g.fast technology. A rate between the FTTdp CPE and the FTTdp CO device may reach a maximum of 2 Gbps. There is the network cable or another medium between the HG and the FTTdp CPE.

During an actual use process, both the FTTdp CPE and the FTTdp CO device are managed by a PON network operator. The HG may be managed by the PON network operator, or may be managed by another operator.

Some configurations need to be performed on the FTTdp CPE, for example, information such as a VLAN (Virtual Local Area Network, virtual local area network) and a priority that are of a UNI (User Network Interface, user network interface) port. For FTTdp CPE with the HG function, more information about L2 (Layer 2, layer 2) and L3 (Layer 3, layer 3) further needs to be configured.

Currently, a network management system manages the FTTdp CPE mainly by means of a TR-069 technology. However, the technology is not applicable to the foregoing scenario in which the FTTdp CPE is connected to the FTTdp CO device.

Document WO 2012/139453 A1 discloses a DPOE system and a service auto-configuration method and network based thereon, the DPOE system comprising an acquisition unit, an parsing unit and a configuration unit; the service auto-configuration network based on the system comprising a DPOE system, a background management system and an optical network unit (ONU); the service auto-configuration method based on the system comprising: the DPOE system acquiring a configuration file from the background management system, the configuration file comprising the configuration information of the ONU and the configuration information of an OLT in the DPOE system; the DPOE system parsing the configuration file, obtaining the configuration information of the ONU and the configuration information of the OLT; configuring the OLT locally and configuring the ONU via a management channel between the OLT and the ONU; thus the service can be activated without separately configuring the OLT after completing the initialization process of the ONU.

Document EP 2 106 064 A1 discloses a method of distributing service is provided, the method includes the following steps: first, the management system generates the corresponding configuration file according to the user's service information, and transmits the configuration file to the user's optical network termination (ONT) by the optical line terminal (OLT), then processes the corresponding configuration according to the configuration file. A system of distributing service and a management system as the same are provided. The solution of this document can be used to the distributing service with the good expansibility.

Document US 2009/024725 A1 discloses a method of managing network devices, comprising: inspecting traffic for management messages, including at least one message expected to apply to a first network device; determining whether the at least one message applies to a second network device; and managing at least the second network device based on the at least one message. An apparatus for managing network devices, comprising: an inspection unit to inspect traffic for management messages, including at least one message expected to apply to a first network device; a determination unit to determine whether the at least one message applies to a second network device; and a management unit to manage at least the second network device based on the at least one message.

### SUMMARY

Embodiments of the present invention provide a fiber-to-the-distribution point device and a communication method thereof, which can implement configuration of FTTdp CPE.

According to a first aspect, a communication method of an FTTdp CO device is provided, including: receiving, by the FTTdp CO device, a first FTTdp device configuration message sent by an FTTdp management device, where the first FTTdp device configuration message is used to configure an FTTdp CPE connected to the FTTdp CO device; acquiring, by the FTTdp CO device and based on the first FTTdp device configuration message, first configuration information used to configure the FTTdp CPE; encapsulating, by the FTTdp CO device, the first configuration information into a first configuration management message, where the first configuration management message includes a first mark, and the first mark is used to enable the FTTdp CPE to identify the first configuration management message; and sending, by the FTTdp CO device, the first configuration management message to the FTTdp CPE; wherein the first configuration management message is an Ethernet packet or an Internet Protocol, IP, packet, and the first mark is a preset virtual local area network, VLAN, identifier or a preset Media Access Control, MAC, address or an IP address that is of the Ethernet packet or the IP packet.

According to a second aspect, a communication method of an FTTdp CPE is provided, including: receiving, by the FTTdp CPE, a first configuration management message sent by an FTTdp CO device, where the first configuration management message includes a first mark, the first mark is used to enable the FTTdp CPE to identify the first configuration management message, and the first configuration management message further includes first configuration information used to configure the FTTdp CPE; and executing, by the FTTdp CPE, service configuration according to the first configuration information; wherein the first configuration management message is an Ethernet packet or an Internet Protocol, IP, packet, and the first mark is a preset virtual local area network, VLAN, identifier or a preset Media Access Control, MAC, address or a preset IP address that is of the Ethernet packet or the IP packet.

According to a third aspect, an FTTdp CO device is provided, including: a receiving unit, configured to receive a first FTTdp device configuration message sent by an FTTdp management device, where the first FTTdp device configuration message is used to configure an FTTdp CPE connected to the FTTdp CO device; an acquiring unit, configured to acquire, based on the first FTTdp device configuration message, first configuration information used to configure the FTTdp CPE; an encapsulation unit, configured to encapsulate the first configuration information into a first configuration management message, where the first configuration management message includes a first mark, and the first mark is used to enable the FTTdp CPE to identify the first configuration management message; and a sending unit, configured to send the first configuration management message to the FTTdp CPE; wherein the first configuration management message is an Ethernet packet or an Internet Protocol ,IP, packet, and the first mark is a preset virtual local area network ,VLAN, identifier or a preset Media Access Control, MAC, address or an IP address that is of the Ethernet packet or the IP packet.

According to the embodiments of the present invention, an FTTdp management device sends an FTTdp device configuration message to an FTTdp CO device, and the FTTdp CO device sends, to an FTTdp CPE, configuration information that is related to the FTTdp CPE and that is in the FTTdp device configuration message, so as to implement configuration of the FTTdp CPE by the FTTdp management device.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of an applicable FTTdp scenario according to an embodiment of the present invention;
FIG. 2 is a flowchart of a communication method of an FTTdp device according to an embodiment of the present invention;
FIG. 3 is a flowchart of a communication method of an FTTdp device according to another embodiment of the present invention;
FIG. 4 is a flowchart of a communication method of an FTTdp device according to another embodiment of the present invention;
FIG. 5 is a flowchart of a configuration process of configuring an FTTdp device according to an embodiment of the present invention;
FIG. 6 is a flowchart of a registration process of an FTTdp device according to an embodiment of the present invention;
FIG. 7 is a flowchart of a dialing process of an FTTdp device according to an embodiment of the present invention;
FIG. 8 is a block diagram of an FTTdp CO device according to an embodiment of the present invention;
FIG. 9 is a block diagram of FTTdp CPE according to an embodiment of the present invention;
FIG. 10 is a block diagram of an FTTdp management device according to an embodiment of the present invention;
FIG. 11 is a block diagram of an FTTdp CO device according to another embodiment of the present invention;
FIG. 12 is a block diagram of FTTdp CPE according to an embodiment of the present invention; and
FIG. 13 is a block diagram of an FTTdp management device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

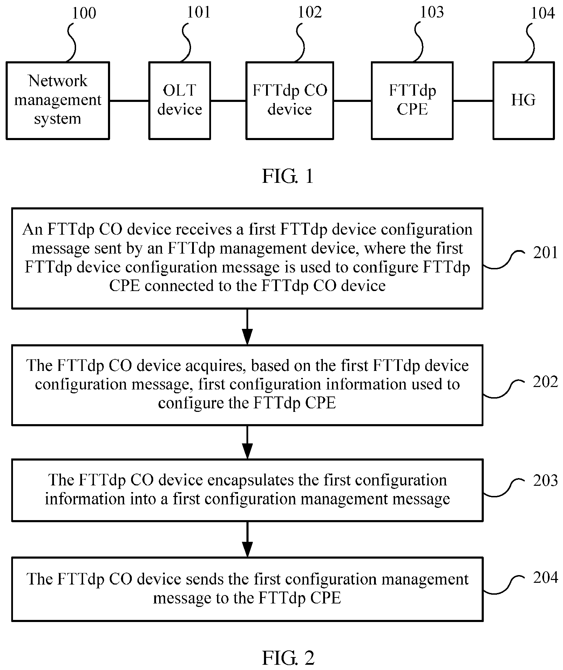

FIG. 1 is a schematic diagram of an applicable FTTdp scenario according to an embodiment of the present invention.

As shown in FIG. 1, a network management system 100 is connected to an FTTdp CO device 102 by using an OLT device 101, for example, connected to the FTTdp CO device 102 by using a PON. FTTdp CPE 103 is connected to the FTTdp CO device 102 by using a twisted pair (for example, a copper wire), and an HG 104 is connected to the FTTdp CPE 103 by using a network cable. In some scenarios, the HG 104 and the FTTdp CPE 103 may be integrated. The network management system 100 or the OLT device 101 may be used as an FTTdp management device and is configured to manage or configure the FTTdp CO device 102 and the FTTdp CPE 103.

The FTTdp CO device 102 and the FTTdp CPE 103 establish a connection and establish a configuration management channel. For example, a process of establishing the connection and establishing the configuration management channel may be executed when the FTTdp CPE 103 goes online (for example, is powered on or physically accesses a network). The so-called establishment of the configuration management channel is that a manner is stipulated and used between the two devices to mark a configuration management message between thereof. For example, the manner may be a preset marking manner (for example, stipulated by a protocol), or a marking manner may be determined through negotiation after the two devices are connected.

The configuration management message is transmitted only between the FTTdp CO device 102 and the FTTdp CPE 103, and specifically, is used to transmit configuration information and a configuration result that are of the FTTdp CPE 103. From the perspective of the FTTdp management device (the network management system 100 or the OLT device 101), the FTTdp CO device 102 and the FTTdp CPE 103 are considered as one network element. When managing an FTTdp device, the network management device 100 or the OLT device 101 only sends an FTTdp device configuration message to the FTTdp CO device 102. However, the FTTdp device configuration message may be used to configure the FTTdp CO device 102 and/or the FTTdp CPE 103. The FTTdp CO device 102 parses the FTTdp device configuration message to acquire second configuration information used to configure the FTTdp CO device 102 and/or first configuration information used to configure the FTTdp CPE 103. The FTTdp CO device 102 executes service configuration of the FTTdp CO device 102 according to the second configuration information, encapsulates the first configuration information into the configuration management channel, and delivers the first configuration information to the corresponding FTTdp CPE 103. The FTTdp CPE 103 executes service configuration according to the first configuration information.

The FTTdp device configuration message sent by the network management system 100 to the FTTdp CO device 102 may be forwarded by using the OLT device 101. For example, the OLT device 101 may directly forward the FTTdp device configuration message or transparently transmit the FTTdp device configuration message. Alternatively, a dedicated configuration channel may be established between the OLT device 101 and the FTTdp CO device 102, that is, a manner is stipulated and used between the OLT device 101 and the FTTdp CO device 102 to mark a dedicated configuration message between thereof. In this case, the OLT device 101 may set or convert the FTTdp device configuration message to a format applicable to the foregoing dedicated configuration channel, and then sends the FTTdp device configuration message to the FTTdp CO device 102.

According to this embodiment of the present invention, an FTTdp management device sends an FTTdp device configuration message to an FTTdp CO device, and the FTTdp CO device sends, to FTTdp CPE, configuration information that is related to the FTTdp CPE and that is in the FTTdp device configuration message, so as to implement configuration of the FTTdp CPE by the FTTdp management device.

In addition, in the prior art, the FTTdp CO device and the FTTdp CPE are separately managed. For example, a network management system may manage the FTTdp CO device by using an OMCI (Optical network terminal Management and Control Interface, optical network terminal management and control interface) message of an OLT device, and manage the FTTdp CPE by means of a TR-069 technology. In such a manner of separate management, two management systems are needed, management efficiency of an operator is relatively low, and maintenance costs are relatively high. However, according to this embodiment of the present invention, configuration can be implemented by the FTTdp management device on the FTTdp CO device and the FTTdp CPE at the same time, which improves system configuration efficiency.

FIG. 2 is a flowchart of a communication method of an FTTdp device according to an embodiment of the present invention. The method in FIG. 2 is executed by an FTTdp CO device (for example, the FTTdp CO device 102 in FIG. 1).

201. The FTTdp CO device receives a first FTTdp device configuration message sent by an FTTdp management device, where the first FTTdp device configuration message is used to configure FTTdp CPE connected to the FTTdp CO device.

202. The FTTdp CO device acquires, based on the first FTTdp device configuration message, first configuration information used to configure the FTTdp CPE.

203. The FTTdp CO device encapsulates the first configuration information into a first configuration management message, where the first configuration management message includes a first mark, and the first mark is used to enable the FTTdp CPE to identify the first configuration management message.

204. The FTTdp CO device sends the first configuration management message to the FTTdp CPE.

According to this embodiment of the present invention, an FTTdp management device sends an FTTdp device configuration message to an FTTdp CO device, and the FTTdp CO device sends, to FTTdp CPE, configuration information that is related to the FTTdp CPE and that is in the FTTdp device configuration message, so as to implement configuration of the FTTdp CPE by the FTTdp management device.

Optionally, in an embodiment, the first FTTdp device configuration message may further be used to configure the FTTdp CO device. In this case, the FTTdp CO device may acquire, based on the first FTTdp device configuration message, second configuration information used to configure the FTTdp CO device, and execute service configuration according to the second configuration information. In this way, according to this embodiment of the present invention, configuration can be implemented by the FTTdp management device on the FTTdp CO device and the FTTdp CPE at the same time, which improves system configuration efficiency.

Specifically, the FTTdp device configuration message may be used to configure the FTTdp CO device and the FTTdp CPE, or used to configure only the FTTdp CO device or configure only the FTTdp CPE. After receiving the FTTdp device configuration message, the FTTdp CO device may determine whether the FTTdp device configuration message is used to configure the FTTdp CO device or the FTTdp CPE. That is, the FTTdp CO device may parse the FTTdp device configuration message to acquire the second configuration information used to configure the FTTdp CO device 102 and/or the first configuration information used to configure FTTdp CPE 103. The FTTdp management device (for example, a network management system or an OLT device) may use a specific mark in the FTTdp device configuration message to inform the FTTdp CO device whether the FTTdp device configuration message is used to configure the FTTdp CO device, or the FTTdp CPE, or both.

For example, the second configuration information may include but is not limited to:
configuration information of PON MAC (Media Access Control, Media Access Control);
configuration information of a line profile;
configuration information of a location, where the configuration information is used to configure the FTTdp CO device to add location information to a PPPoE (Point-to-Point Protocol over Ethernet, Point-to-Point Protocol over Ethernet) packet or a DHCP (Dynamic Host Configuration Protocol, Dynamic Host Configuration Protocol) packet;
service flow configuration information;
configuration information of QoS (Quality of Service, quality of service), where the configuration information is generally used to configure QoS of the FTTdp CO device in a downlink direction; and
configuration information of a MAC table, where the configuration information is used to configure a static MAC table on the FTTdp CO device.

The first configuration information may include but is not limited to:
configuration information of a mode of a UNI interface;
configuration information of a VLAN of the UNI interface;
configuration information of a location, where the configuration information is used to configure the FTTdp CPE to add location information to a PPPoE packet or a DHCP packet;
configuration information of routing information of the FTTdp CPE;
service flow configuration information; and
configuration information of QoS, where the configuration information is generally used to configure QoS of the FTTdp CPE in an uplink direction.

The foregoing examples of content of the FTTdp device configuration message and the configuration information are only exemplary and do not limit the scope of the present invention. In addition, this embodiment of the present invention also imposes no limitation on a specific format of the FTTdp device configuration message. Further, multiple pieces of configuration content in the foregoing configuration content may be sent to the FTTdp CO device by integrating the multiple pieces of configuration content into one FTTdp device configuration message, or may be sent to the FTTdp CO device by respectively using multiple FTTdp device configuration messages.

Specifically, the FTTdp device configuration message may carry the first configuration information and the second configuration information that are separate. For example, the first configuration information and the second configuration information are respectively carried by using different FTTdp device configuration messages, or the first configuration information and the second configuration information are respectively carried at different locations of a same FTTdp device configuration message. In this manner, end-to-end configuration may be implemented on the FTTdp management device. For example, when the FTTdp management device is an OLT device, the OLT device parses a configuration command delivered by a network management system into three types of configuration information, which are respectively used to configure the OLT device, the FTTdp CO device, and the FTTdp CPE. Then, information used to configure the FTTdp CO device and the FTTdp CPE (that is, the foregoing first configuration information and second configuration information) is sent to the FTTdp CO device by using the FTTdp device configuration message.

Alternatively, the FTTdp management device (for example, a network management system or an OLT device) may not distinguish between information used to configure the FTTdp CO device and information used to configure the FTTdp CPE, and carries the configuration information in the FTTdp device configuration message as a whole and sends the configuration information to the FTTdp CO device. Then, the FTTdp CO device parses the FTTdp device configuration message to determine the first configuration information and the second configuration information from the whole configuration information. In this manner, the FTTdp management device does not need to distinguish between the FTTdp CO device and the FTTdp CPE. That is, the FTTdp management device considers the FTTdp CO device and the FTTdp CPE as devices for configuration and management at the same time. For example, the FTTdp device configuration message may include only one piece of service flow configuration information. The FTTdp CO device parses the service flow configuration information into service flow configuration information to be executed on the FTTdp CO device (that is, the foregoing first configuration information) and service flow configuration information to be executed on the FTTdp CPE (that is, the foregoing second configuration information). For another example, QoS configuration information in the FTTdp device configuration message may include QoS information in two directions: uplink and downlink. The FTTdp CO device parses the QoS configuration information into downlink QoS configuration information to be executed on the FTTdp CO device (that is, the foregoing first configuration information) and uplink QoS configuration information to be executed on the FTTdp CPE (that is, the foregoing second configuration information).

Optionally, in an embodiment, the FTTdp device configuration message may be an OMCI message, an OAM (Operation Administration and Maintenance, operation administration and maintenance) message of an EPON, or an Ethernet packet or an IP (Internet Protocol, Internet Protocol) packet that has a specific Ethernet characteristic. The Ethernet packet or the IP packet that has the specific Ethernet characteristic means that a characteristic of the packet has a specific value, for example, a specific VLAN identifier, a specific MAC address, or a specific IP address.

In addition, this embodiment of the present invention imposes no limitation on a format and a marking manner that are of a configuration management message sent between the FTTdp CO device and the FTTdp CPE.

Optionally, in an embodiment, the foregoing first configuration management message may be a configuration management packet on an RMC (Robust Management Channel, robust management channel) or an EoC (Embedded operations Channel, embedded operations channel), and the first mark is carried at a preset location of the configuration management packet. The configuration management packet may also be referred to as an OAM packet or an OAM frame. For example, a reserved (reserved) bit of an OAM packet transmitted on the RMC or the EoC may be used as a location of the foregoing first mark.

Optionally, in another embodiment, the foregoing first configuration management message may be an Ethernet packet or an IP packet, and the first mark is a preset characteristic value of the Ethernet packet or the IP packet, for example, a preset VLAN identifier, or a preset MAC address, or a preset IP address. For example, it is assumed that neither an IP address of the FTTdp CO device nor an IP address of the FTTdp CPE is 192.168.255.255, when the FTTdp CPE needs to send a configuration management message of an Ethernet packet form to the FTTdp CO device, 192.168.255.255 may be filled in a source IP address or a target IP address that is of the Ethernet packet, so as to inform the FTTdp CO device that the Ethernet packet is the configuration management message, and vice versa.

Optionally, in another embodiment, after step 204, the FTTdp CO device may receive a second configuration management message sent by the FTTdp CPE, where the second configuration management message carries a result of service configuration executed by the FTTdp CPE. The second configuration management message may further include a second mark, where the second mark is used to enable the FTTdp CO device to identify the second configuration management message.

For a format of the second configuration management message, refer to the format of the foregoing first configuration management message. For a location of the second mark, also refer to the location of the foregoing first mark.

Optionally, in another embodiment, the FTTdp CO device may send a configuration response message to the FTTdp management device, where the configuration response message carries a result of service configuration executed by the FTTdp CPE and a result of service configuration executed by the FTTdp CO device. That is, the FTTdp CO device may integrate the result of the service configuration executed by the FTTdp CO device and the result of the service configuration executed by the FTTdp CPE, and send, to the FTTdp management device, a result obtained by integration.

Similar to the FTTdp device configuration message, the configuration response message may also be an OMCI message, an OAM message of an EPON, or an Ethernet packet or an IP packet that has a specific Ethernet characteristic. The Ethernet packet or the IP packet that has the specific Ethernet characteristic means that a characteristic of the packet has a specific value, for example, a specific VLAN identifier, a specific MAC address, or a specific IP address.

In this way, for the FTTdp management device, the FTTdp CO device and the FTTdp CPE may be considered as one network element. This configuration and management manner is easily implemented, and efficiency is relatively high.

Optionally, in another embodiment, the FTTdp CO device and the FTTdp CPE may negotiate about maximum bandwidth. The maximum bandwidth may also be referred to as activated bandwidth, which indicates maximum bandwidth available when transmission is performed between the FTTdp CO device and the FTTdp CPE. Then, the FTTdp CO device may send a register packet to the FTTdp management device (in this case, the FTTdp management device is an OLT device), where the register packet carries information about the maximum bandwidth.

According to an existing bandwidth allocation solution, the OLT device cannot learn the maximum bandwidth between the FTTdp CO device and the FTTdp CPE, and may configure inappropriate bandwidth for the FTTdp CO device. In this embodiment of the present invention, the register packet carries the information about the maximum bandwidth, so that the OLT device can allocate appropriate bandwidth according to the maximum bandwidth, which improves configuration and management efficiency.

Optionally, in another embodiment, the FTTdp CO device may receive a DHCP packet or a PPPoE packet that is sent by the FTTdp CPE, where the DHCP packet or the PPPoE packet carries CID (Circuit Identity, circuit identity) information of the FTTdp CPE. The CID information is used to carry location information. The FTTdp CO device may add CID information of the FTTdp CO device to the DHCP packet or the PPPoE packet, and then send, to the FTTdp management device, the DHCP packet or the PPPoE packet that carries the CID information of the FTTdp CO device and the CID information of the FTTdp CPE.

In this way, the DHCP packet or the PPPoE packet that is received by the FTTdp management device may include both the CID information of the FTTdp CO device and the CID information of the FTTdp CPE, which is conducive to fault diagnosis or account binding that is performed by the FTTdp management device.

Optionally, in another embodiment, the FTTdp CO device may further receive a second FTTdp device configuration message sent by the FTTdp management device, where the second FTTdp device configuration message is used to configure the FTTdp CO device. The FTTdp CO device executes service configuration according to the second FTTdp device configuration message. In this way, the FTTdp management device may configure only the FTTdp CO device.

Optionally, in another embodiment, the FTTdp CO device may further receive a third FTTdp device configuration message sent by the FTTdp management device, where the third FTTdp device configuration message is used to configure the FTTdp CPE. The FTTdp CO device may acquire, based on the third FTTdp device configuration message, third configuration information used to configure the FTTdp CPE, and encapsulate the third configuration information into a third configuration management message. The third configuration management message includes a third mark, where the third mark is used to enable the FTTdp CPE to identify the third configuration management message. Then, the FTTdp CO device may send the third configuration management message to the FTTdp CPE. In this way, the FTTdp management device may configure only the FTTdp CPE.

For a format of the third configuration management message, refer to the format of the foregoing first configuration management message. For a location of the third mark, also refer to the location of the foregoing first mark.

For formats of the second FTTdp device configuration message and the third FTTdp device configuration message, refer to the format of the foregoing first FTTdp device configuration message.

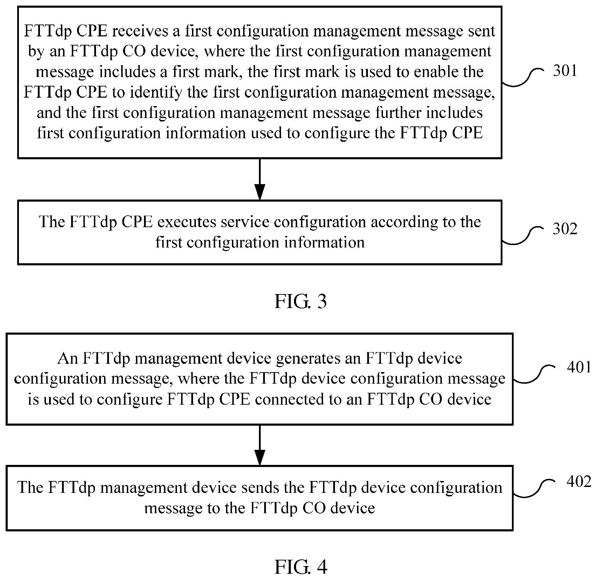

FIG. 3 is a flowchart of a communication method of an FTTdp device according to another embodiment of the present invention. The method in FIG. 3 is executed by FTTdp CPE (for example, the FTTdp CPE 103 in FIG. 1), and corresponds to the method in FIG. 2. Therefore, repeated description is appropriately omitted.

301. The FTTdp CPE receives a first configuration management message sent by an FTTdp CO device, where the first configuration management message includes a first mark, the first mark is used to enable the FTTdp CPE to identify the first configuration management message, and the first configuration management message further includes first configuration information used to configure the FTTdp CPE.

302. The FTTdp CPE executes service configuration according to the first configuration information.

According to this embodiment of the present invention, an FTTdp management device sends an FTTdp device configuration message to an FTTdp CO device, and the FTTdp CO device sends, to FTTdp CPE, configuration information that is related to the FTTdp CPE and that is in the FTTdp device configuration message, so as to implement configuration of the FTTdp CPE by the FTTdp management device.

The foregoing first configuration management message is obtained by encapsulating the first configuration information after the FTTdp CO device acquires, based on the FTTdp device configuration message sent by the FTTdp management device, the first configuration information used to configure the FTTdp CPE. The foregoing FTTdp device configuration message may be used to configure both the FTTdp CO device and the FTTdp CPE, or may be used to configure only the FTTdp CPE.

Optionally, in an embodiment, the foregoing first configuration management message may be a configuration management packet on an RMC or an EoC, and the first mark is carried at a preset location of the configuration management packet; or the foregoing first configuration management message may be an Ethernet packet or an IP packet, and the first mark is a preset VLAN identifier, or a preset MAC address, or a preset IP address that is of the Ethernet packet or the IP packet.

Optionally, in another embodiment, the FTTdp CPE may send a second configuration management message to the FTTdp CO device, where the second configuration management message carries a result of configuration executed by the FTTdp CPE according to configuration information. The second configuration management message further includes a second mark, where the second mark is used to enable the FTTdp CO device to identify the second configuration management message.

For example, similar to the first configuration management message and the first mark, the second configuration management message may be a configuration management packet on an RMC or an EoC, or a protocol packet negotiated and used between the FTTdp CPE and the FTTdp CO device, and the second mark is carried at a preset location of the packet; or the foregoing second configuration management message may be an Ethernet packet or an IP packet, and the second mark is a preset VLAN identifier, or a preset MAC address, or a preset IP address that is of the Ethernet packet or the IP packet.

Optionally, in another embodiment, the FTTdp CPE may add CID information of the FTTdp CPE to a DHCP packet or a PPPoE packet, and then send, to the FTTdp CO device, the DHCP packet or the PPPoE packet that carries the CID information of the FTTdp CPE.

Optionally, in another embodiment, before step 301, the FTTdp CPE and the FTTdp CO device may negotiate about the first configuration management message and the first mark. However, this embodiment of the present invention is not limited thereto. A format and a marking manner that are of a configuration management message between the FTTdp CPE and the FTTdp CO device may also be stipulated in advance, for example, be stipulated by a protocol.

In this way, for the FTTdp management device, the FTTdp CO device and the FTTdp CPE may be considered as one network element. This configuration and management manner is easily implemented, and efficiency is relatively high.

FIG. 4 is a flowchart of a communication method of an FTTdp device according to another embodiment of the present invention. The method in FIG. 4 is executed by an FTTdp management device (for example, the network management system 100 or the OLT device 101 in FIG. 1), and corresponds to the method in FIG. 2. Therefore, repeated description is appropriately omitted.

401. The FTTdp management device generates an FTTdp device configuration message, where the FTTdp device configuration message is used to configure FTTdp CPE connected to an FTTdp CO device.

402. The FTTdp management device sends the FTTdp device configuration message to the FTTdp CO device.

According to this embodiment of the present invention, an FTTdp management device sends an FTTdp device configuration message to an FTTdp CO device, and the FTTdp CO device performs, based on the FTTdp device configuration message, service configuration and sends, to FTTdp CPE, configuration information related to the FTTdp CPE, so that configuration is implemented by the FTTdp management device on the FTTdp CO device and the FTTdp CPE at the same time, which improves system configuration efficiency.

Optionally, in an embodiment, the FTTdp management device may further receive a configuration response message sent by the FTTdp CO device, where the configuration response message carries a result of configuration executed by the FTTdp CO device according to second configuration information and a result of configuration executed by the FTTdp CPE according to first configuration information.

Optionally, in an embodiment, the FTTdp management device may further receive a register packet sent by the FTTdp CO device, where the register packet carries information about maximum bandwidth negotiated by the FTTdp CO device and the FTTdp CPE.

According to an existing bandwidth allocation solution, the FTTdp management device cannot learn the maximum bandwidth between the FTTdp CO device and the FTTdp CPE, and may configure inappropriate bandwidth for the FTTdp CO device. In this embodiment of the present invention, the register packet carries the information about the maximum bandwidth, so that the FTTdp management device can allocate appropriate bandwidth according to the maximum bandwidth, which improves configuration and management efficiency.

In addition, this embodiment of the present invention imposes no limitation on a specific format of the FTTdp device configuration message. Optionally, in an embodiment, the FTTdp device configuration message may be an OMCI message, an OAM message of an EPON, or an Ethernet packet or an IP packet that has a specific Ethernet characteristic. The Ethernet packet or the IP packet that has the specific Ethernet characteristic means that a characteristic of the packet has a specific value, for example, a specific VLAN identifier, a specific MAC address, or a specific IP address.

In this way, for the FTTdp management device, the FTTdp CO device and the FTTdp CPE may be considered as one network element. This configuration and management manner is easily implemented, and efficiency is relatively high.

The following describes the method in this embodiment of the present invention in more detail with reference to specific examples.

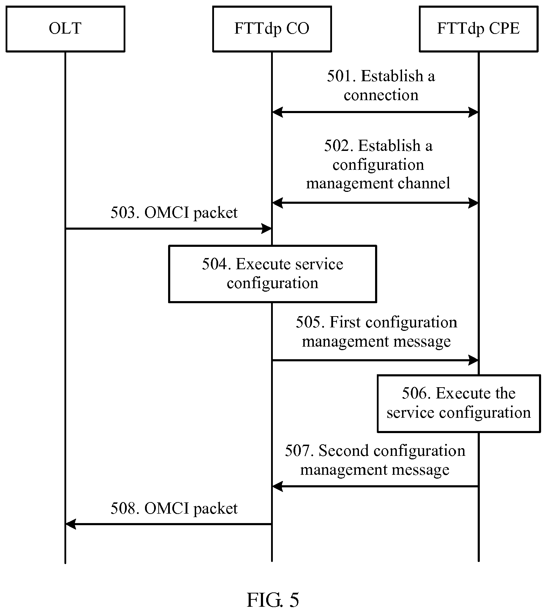

FIG. 5 is a flowchart of a configuration process of configuring an FTTdp device according to an embodiment of the present invention.

501. FTTdp CPE establishes a connection to an FTTdp CO device.

502. The FTTdp CPE and the FTTdp CO device perform negotiation and stipulate a format and a mark that are of a configuration management message transmitted between the two devices, for example, the foregoing first configuration management message and first mark, and a second configuration management message and a second mark. These configuration management messages are only used for communication between the FTTdp CO device and the FTTdp CPE, and are not sent to another device.

In this way, a dedicated configuration management channel is established between the FTTdp CPE and the FTTdp CO device. However, it should be noted that step 502 is optional. The configuration management message may be preset, for example, be set according to a protocol stipulation.

503. An OLT device encapsulates, into an OMCI packet, information used to configure the FTTdp CO device and the FTTdp CPE, and delivers the OMCI packet to the FTTdp CO device.

The foregoing information used to configure the FTTdp CO device and the FTTdp CPE may be received by the OLT device from a network management system, for example, by using an SNMP (Simple Network Management Protocol, Simple Network Management Protocol) packet sent by the network management system. Alternatively, the foregoing information used to configure the FTTdp CO device and the FTTdp CPE may be prestored by the OLT device.

The OMCI packet may include a transaction correlation identifier (Transaction Correlation Identifier) of two bytes, a message type (Message Type) of one byte, a device identifier (Device Identifier) of one byte, a managed entity class value (Managed entity class value) of two bytes, a managed entity class value status (Managed entity class Value status) of two bytes, message content (Message Contents) of 32 bytes, and an OMCI trailer (OMCI Trailer) of eight bytes. A value of a "device identifier" field of the OMCI packet is 0x0A (in hexadecimal). A "managed entity class value" field of the OMCI packet may be used to mark a packet type. Specific configuration information, for example, a mode of a UNI interface or QoS information, may be carried by using a "message content" field and/or another appropriate field.

In an embodiment, the "managed entity class value" field of the OMCI packet may be used to mark an FTTdp device that the OMCI packet is used to configure. For example, when a value of the "managed entity class value" field is 666 (in decimal), it indicates that the OMCI packet is used to configure the FTTdp CPE; when the value of the "managed entity class value" field is 667 (in decimal), it indicates that the OMCI packet is used to configure the FTTdp CO device; when the value of the "managed entity class value" field is 668 (in decimal), it indicates that the OMCI packet is used to configure both the FTTdp CO device and the FTTdp CPE.

In another embodiment, a specific value of the "managed entity class value" field of the OMCI packet may be used to mark that the OMCI packet is a configuration message. A configuration object of the configuration message is indicated by using a mark field at another location in the OMCI packet. For example, when the value of the "managed entity class value" field is 888 (in decimal), it indicates that the OMCI packet is a configuration message. Two extra bits may be obtained by dividing from the "message content" field, where "00" indicates that the OMCI packet is used to configure the FTTdp CPE, "11" indicates that the OMCI packet is used to configure the FTTdp CO device, and "01" or "10" indicates that the OMCI packet is used to configure both the FTTdp CO device and the FTTdp CPE.

Certainly, the foregoing specific numeric value is only exemplary, and does not limit the scope of the present invention. Persons skilled in the art may easily figure out that another numeric value is used as a mark of the OMCI packet. Such an embodiment also falls within the scope of the present invention.

Herein, the OMCI packet in step 503 is an example of the foregoing FTTdp device configuration message. However, this embodiment of the present invention is not limited thereto. An OLT configuration message of another form may also be used, for example, an OAM packet or an Ethernet packet or an IP packet. Similar to the foregoing OMCI packet, persons skilled in the art may construct the OAM packet or the Ethernet packet or the IP packet that is used as the FTTdp device configuration message.

504. After receiving the OMCI packet, the FTTdp CO device determines, from service configuration indicated by the OMCI packet, service configuration that needs to be executed on the FTTdp CO device and service configuration that needs to be executed on the FTTdp CPE. The service configuration that needs to be executed on the FTTdp CO device is directly processed on the FTTdp CO device.

505. The service configuration that needs to be processed by the FTTdp CPE is sent to the FTTdp CPE after being encapsulated by using the first configuration management message.

506. After the FTTdp CPE receives the first configuration management message, the FTTdp CPE executes the service configuration.

507. The FTTdp CPE encapsulates an execution result into the second configuration management message and returns the execution result to the FTTdp CO device.

508. The FTTdp CO device then encapsulates the execution result of the FTTdp CPE into the OMCI packet and sends the execution result to the OLT device.

Herein, the OMCI packet in step 508 is an example of a configuration response message. However, this embodiment of the present invention is not limited thereto. A configuration response message of another form may also be used, for example, an OAM packet or an Ethernet packet or an IP packet.

In addition, an execution result of the FTTdp CO device may further be carried in the OMCI packet in step 508. However, this embodiment of the present invention is not limited thereto. For example, after step 504, the FTTdp CO device may send only an OMCI packet to the OLT device to report the execution result of the FTTdp CO device; after the execution result of the FTTdp CPE is received in step 507, the FTTdp CO device reports the execution result of the FTTdp CPE by using another OMCI packet in step 508.

For ease of understanding a service configuration and management process in this embodiment of the present invention, the following gives examples for description.

A VLAN stacking (stacking) scenario is used as a first example. In this scenario, two layers of VLANs are added to an uplink service, where an inner VLAN identifies a service type, and an outer VLAN identifies a user. When the FTTdp management device sends, to the FTTdp CO device, a configuration message used to configure a VLAN stacking service, the FTTdp CO device identifies that the configuration message is classified into two parts. One part is that the FTTdp CO device is configured to add one layer of VLAN in an uplink direction to identify the user, and the FTTdp CO device strips one layer of VLAN when sending a service packet to the FTTdp CPE in a downlink direction. The other part is that the FTTdp CPE is configured to add one layer of VLAN in an uplink direction to identify the service type, and the FTTdp CPE strips one layer of VLAN in a downlink direction.

A rate limiting scenario is used as a second example. In this scenario, the FTTdp management device sends, to the FTTdp CO device, a configuration message used to configure a rate limiting function. After receiving the configuration message, the FTTdp CO device determines by means of analysis that the rate limiting function needs to be configured on the FTTdp CO device and the FTTdp CPE. Therefore, the FTTdp CO device obtains two pieces of configuration information by parsing out the configuration message, where one piece of configuration information is used to configure a downlink rate limiting function, and the other piece of configuration information is used to configure an uplink rate limiting function. The configuration information used to configure the downlink rate limiting function is executed on the FTTdp CO device. Specifically, after configuring rate limiting of a downlink service of a forwarding chip of the FTTdp CO device, the FTTdp CO device buffers a configuration result. After the configuration information used to configure the uplink rate limiting function is encapsulated into a configuration management message between the FTTdp CO device and the FTTdp CPE, the configuration management message is sent to the FTTdp CPE. After receiving the configuration management message, the FTTdp CPE parses content of the configuration management message and finds that the configuration management message is used to configure the uplink rate limiting function. Therefore, the FTTdp CPE configures an uplink rate limiting function of a forwarding chip of the FTTdp CPE, and then encapsulates a configuration result into a configuration management message and sends the configuration management message to the FTTdp CO device. After receiving the configuration result returned by the FTTdp CPE, the FTTdp CO device synthesizes the two configuration results and returns a final result to the FTTdp management device.

A traffic suppression scenario is used as a third example. In this scenario, the FTTdp management device sends, to the FTTdp CO device, a configuration message used to configure a traffic suppression function. After receiving the configuration message, the FTTdp CO device determines by means of analysis that the traffic suppression function needs to be configured on the FTTdp CO device and the FTTdp CPE. The FTTdp CO device obtains two pieces of configuration information by parsing out the configuration message, where one piece of configuration information is used to configure traffic suppression of an NNI (Network-to-Network Interface, network-to-network interface) interface, and the other piece of configuration information is used to configure traffic suppression of a UNI interface. A function of configuring the traffic suppression of the NNI interface is executed on the FTTdp CO device. After configuring a traffic suppression function of an NNI interface of a forwarding chip of the FTTdp CO device, the FTTdp CO device buffers a configuration result. After a function used to configure the traffic suppression of the UNI interface is encapsulated into a configuration management message between the FTTdp CO device and the FTTdp CPE, the configuration management message is sent to the FTTdp CPE. After receiving the configuration management message, the FTTdp CPE parses content of the configuration management message and finds that the configuration management message is used to configure the traffic suppression function of the UNI interface. The FTTdp CPE configures a traffic suppression function of a UNI interface of a forwarding chip of the FTTdp CPE, and then encapsulates a configuration result into a configuration management message and sends the configuration management message to the FTTdp CO device. After receiving the configuration result returned by the FTTdp CPE, the FTTdp CO device synthesizes the two configuration results and returns a final result to the FTTdp management device.

In this way, for the FTTdp management device, the FTTdp CO device and the FTTdp CPE may be considered as one network element or considered as a unified device. This configuration and management manner is easily implemented, and efficiency is relatively high.

In addition, when the FTTdp CPE goes online, a configuration of the FTTdp CPE may be automatically delivered by the FTTdp CO device by using a configuration management channel between the FTTdp CO device and the FTTdp CPE. The configuration information of the FTTdp CPE may be stored on the FTTdp CO device or the OLT device or the network management system.

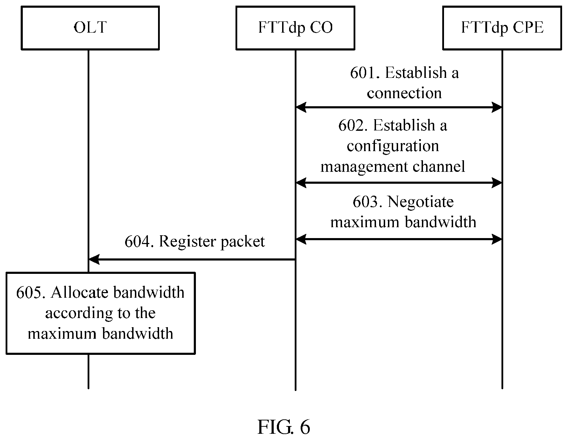

FIG. 6 is a flowchart of a registration process of an FTTdp device according to an embodiment of the present invention.

601. FTTdp CPE establishes a connection to an FTTdp CO device.

602. The FTTdp CPE and the FTTdp CO device perform negotiation and stipulate a format and a mark that are of a configuration management message transmitted between the two devices, for example, the foregoing first configuration management message and first mark, and a second configuration management message and a second mark. These configuration management messages are only used for communication between the FTTdp CO device and the FTTdp CPE, and are not sent to another device.

In this way, a dedicated configuration management channel is established between the FTTdp CPE and the FTTdp CO device. However, it should be noted that step 602 is optional. The configuration management message may be preset, for example, be set according to a protocol stipulation.

603. The FTTdp CPE and the FTTdp CO device negotiate about maximum bandwidth.

Herein, it is assumed that the FTTdp CPE and the FTTdp CO device are connected in a single port manner, that is, the FTTdp CO device is connected to only one FTTdp CPE.

604. During registration, the FTTdp CO device with a single port sends a register packet to an OLT device, where the register packet carries information about the maximum bandwidth negotiated in step 603.

For example, a reserved (reserved) field or an unoccupied field that is of an existing register packet may be used to indicate the maximum bandwidth. Alternatively, a separate register packet used to carry the maximum bandwidth may be constructed. For example, a "managed entity class value" (Managed entity class value) field of the newly constructed register packet may be a specific value, for example, 999 (in decimal), which indicates that the packet is used to report the maximum bandwidth negotiated between the FTTdp CO device and the FTTdp CPE. The information about the maximum bandwidth is carried in "message content" (Message Contents) field and/or another appropriate field that is of the newly constructed register packet.

The information that is about the maximum bandwidth and that is carried in the register packet may be a value of the maximum bandwidth, or may be a mapping value, an index value, or a corresponding value that is of the maximum bandwidth. This embodiment of the present invention imposes no limitation on a specific form of the information about the maximum bandwidth.

605. The OLT device allocates bandwidth to the FTTdp CO device according to the maximum bandwidth.

In this embodiment of the present invention, the register packet carries the information about the maximum bandwidth, so that the OLT device can allocate appropriate bandwidth according to the maximum bandwidth, which improves configuration and management efficiency.

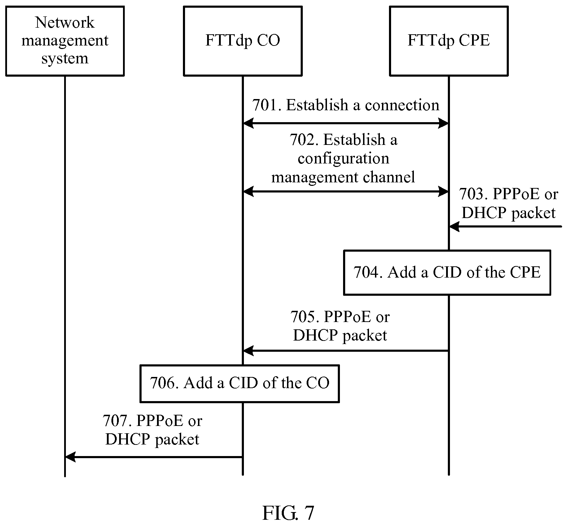

FIG. 7 is a flowchart of a dialing process of an FTTdp device according to an embodiment of the present invention.

701. FTTdp CPE establishes a connection to an FTTdp CO device.

702. The FTTdp CPE and the FTTdp CO device perform negotiation and stipulate a format and a mark that are of a configuration management message transmitted between the two devices, for example, the foregoing first configuration management message and first mark, and a second configuration management message and a second mark. These configuration management messages are only used for communication between the FTTdp CO device and the FTTdp CPE, and are not sent to another device.

In this way, a dedicated configuration management channel is established between the FTTdp CPE and the FTTdp CO device. However, it should be noted that step 702 is optional. The configuration management message may be preset, for example, be set according to a protocol stipulation.

703. The FTTdp CPE receives a PPPoE or DHCP packet on a UNI side. For example, the PPPoE or DHCP packet may be generated by an HG during PPPoE or DHCP dialing.

704. The FTTdp CPE writes location information (for example, a UNI interface number) of the FTTdp CPE into a CID field of the PPPoE or DHCP packet.

The PPPoE packet is used as an example. CID information is included in a "vendor tag" (vendor tag) field of the PPPoE packet. A CID of the PPPoE packet obtained in step 704 may be:
"[Relay-identifier] eth 1/100", where 1/100 indicates that a CPE port number (for example, a UNI interface number) port=1, and a virtual local area network VLAN=100.

This embodiment of the present invention imposes no limitation on a specific construction manner of the CID information in the PPPoE packet. In addition, CID information of the DHCP packet may also be similarly constructed.

705. The FTTdp CPE sends the PPPoE or DHCP packet to the FTTdp CO device.

706. When receiving the PPPoE or DHCP packet sent by the FTTdp CPE, the FTTdp CO device writes location information (for example, line information) of the FTTdp CO device into the CID field, and finally combines the UNI interface number of the FTTdp CPE and a UNI interface number of an FTTdp CO into a final CID.

The PPPoE packet is used as an example, and the CID of the PPPoE packet obtained in step 706 may be:
"[Relay-identifier] eth 3/8/1/100", where "3/8/1/100" indicates that a timeslot slot=3, a CO port number (for example, a UNI interface number) port=8, a CPE port number (for example, a UNI interface number) port=1, and a virtual local area network VLAN=100.

This embodiment of the present invention imposes no limitation on a specific construction manner of the CID information in the PPPoE packet. In addition, the CID information of the DHCP packet may also be similarly constructed.

707. The FTTdp CO device sends the PPPoE or DHCP packet to a network management system.

In this way, the DHCP packet or the PPPoE packet that is received by the network management system may include both the CID information of the FTTdp CO device and the CID information of the FTTdp CPE, which is conducive to fault diagnosis or account binding that is performed by the network management system.

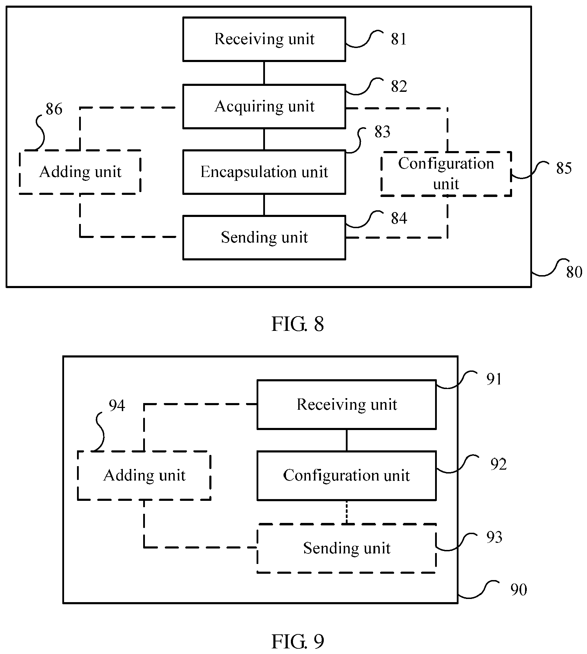

FIG. 8 is a block diagram of an FTTdp CO device according to an embodiment of the present invention. An FTTdp CO device 80 in FIG. 8 includes a receiving unit 81, an acquiring unit 82, an encapsulation unit 83, and a sending unit 84.

The receiving unit 81 is configured to receive a first FTTdp device configuration message sent by an FTTdp management device, where the first FTTdp device configuration message is used to configure FTTdp CPE connected to the FTTdp CO device 80.

The acquiring unit 82 is configured to acquire, based on the first FTTdp device configuration message, first configuration information used to configure the FTTdp CPE.

The encapsulation unit 83 is configured to encapsulate the first configuration information into a first configuration management message, where the first configuration management message includes a first mark, and the first mark is used to enable the FTTdp CPE to identify the first configuration management message.

The sending unit 84 is configured to send the first configuration management message to the FTTdp CPE.

According to this embodiment of the present invention, an FTTdp management device sends an FTTdp device configuration message to an FTTdp CO device, and the FTTdp CO device sends, to FTTdp CPE, configuration information that is related to the FTTdp CPE and that is in the FTTdp device configuration message, so as to implement configuration of the FTTdp CPE by the FTTdp management device.

The FTTdp CO device 80 can implement an operation related to the FTTdp CO device in the foregoing method embodiment. To avoid repetition, details are not described herein again.

Optionally, in an embodiment, the first FTTdp device configuration message received by the receiving unit 81 is further used to configure the FTTdp CO device 80, and the FTTdp CO device 80 may further include a configuration unit 85, configured to execute service configuration according to second configuration information.

Optionally, in another embodiment, the foregoing first configuration management message may be a configuration management packet on an RMC or an EoC, and the first mark is carried at a preset location of the configuration management packet; or the foregoing first configuration management message may be an Ethernet packet or an IP packet, and the first mark is a preset VLAN identifier, or a preset MAC address, or a preset IP address that is of the Ethernet packet or the IP packet.

Optionally, in another embodiment, the receiving unit 81 may further be configured to receive a second configuration management message sent by the FTTdp CPE, where the second configuration management message carries a result of service configuration executed by the FTTdp CPE according to the first configuration information in the first configuration management message. The second configuration management message further includes a second mark, where the second mark is used to enable the FTTdp CO device 80 to identify the second configuration management message.

Similarly, the foregoing second configuration management message may be a configuration management packet on an RMC or an EoC, and the second mark is carried at a preset location of the configuration management packet; or the foregoing second configuration management message may be an Ethernet packet or an IP packet, and the second mark is a preset VLAN identifier, or a preset MAC address, or a preset IP address that is of the Ethernet packet or the IP packet.

Optionally, in another embodiment, the sending unit 84 may further be configured to send a configuration response message to the FTTdp management device, where the configuration response message carries a result of service configuration executed by the FTTdp CPE and a result of service configuration executed by the FTTdp CO device 80 (specifically, the configuration unit 85).

Optionally, in another embodiment, the sending unit 84 may further be configured to send a register packet to the FTTdp management device, where the register packet carries information about maximum bandwidth negotiated by the FTTdp CO device 80 and the FTTdp CPE.

Optionally, in another embodiment, the receiving unit 81 may further be configured to receive a DHCP packet or a PPPoE packet that is sent by the FTTdp CPE, where the DHCP packet or the PPPoE packet carries CID information of the FTTdp CPE. The FTTdp CO device 80 may further include an adding unit 86, configured to add CID information of the FTTdp CO device 80 to the DHCP packet or the PPPoE packet. The sending unit 84 may further be configured to send, to the FTTdp management device, the DHCP packet or the PPPoE packet that carries the CID information of the FTTdp CO device 80 and the CID information of the FTTdp CPE.

Optionally, in another embodiment, the foregoing FTTdp device configuration message or configuration response message may be an OMCI message, an OAM message of an EPON, or an Ethernet packet or an IP packet that has a specific Ethernet characteristic.

Optionally, in another embodiment, the receiving unit 81 may further be configured to receive a second FTTdp device configuration message sent by the FTTdp management device, where the second FTTdp device configuration message is used to configure the FTTdp CO device 80. The configuration unit 85 is further configured to execute service configuration according to the second FTTdp device configuration message. In this way, the FTTdp management device may configure only the FTTdp CO device 80.

For a format of a third configuration management message, refer to the format of the foregoing first configuration management message. For a location of a third mark, also refer to the location of the foregoing first mark.

For formats of the second FTTdp device configuration message and a third FTTdp device configuration message, refer to the format of the foregoing first FTTdp device configuration message.

In this way, for the FTTdp management device, the FTTdp CO device and the FTTdp CPE may be considered as one network element. This configuration and management manner is easily implemented, and efficiency is relatively high.

FIG. 9 is a block diagram of FTTdp CPE according to an embodiment of the present invention. FTTdp CPE 90 in FIG. 9 includes a receiving unit 91 and a configuration unit 92.

The receiving unit 91 is configured to receive a first configuration management message sent by an FTTdp CO device, where the first configuration management message includes a first mark, the first mark is used to enable the FTTdp CPE 90 to identify the first configuration management message, and the first configuration management message further includes first configuration information used to configure the FTTdp CPE 90.

The configuration unit 92 is configured to execute service configuration according to the first configuration information.

According to this embodiment of the present invention, an FTTdp management device sends an FTTdp device configuration message to an FTTdp CO device, and the FTTdp CO device sends, to FTTdp CPE, configuration information that is related to the FTTdp CPE and that is in the FTTdp device configuration message, so as to implement configuration of the FTTdp CPE by the FTTdp management device.

The foregoing first configuration management message is obtained by encapsulating the first configuration information after the FTTdp CO device acquires, based on the FTTdp device configuration message sent by the FTTdp management device, the first configuration information used to configure the FTTdp CPE. The foregoing FTTdp device configuration message may be used to configure both the FTTdp CO device and the FTTdp CPE, or may be used to configure only the FTTdp CPE.

The FTTdp CPE 90 can implement an operation related to the FTTdp CPE in the foregoing method embodiment. To avoid repetition, details are not described herein again.

Optionally, in an embodiment, the foregoing first configuration management message may be a configuration management packet on an RMC or an EoC, and the first mark is carried at a preset location of the configuration management packet; or the foregoing first configuration management message may be an Ethernet packet or an IP packet, and the first mark is a preset VLAN identifier, or a preset MAC address, or a preset IP address that is of the Ethernet packet or the IP packet.

Optionally, in another embodiment, the FTTdp CPE 90 may further include a sending unit 93, configured to send a second configuration management message to the FTTdp CO device, where the second configuration management message carries a result of the service configuration executed by the FTTdp CPE 90 (specifically, the configuration unit 92) according to the first configuration information. The second configuration management message further includes a second mark, where the second mark is used to enable the FTTdp CO device to identify the second configuration management message.

Similarly, the foregoing second configuration management message may be a configuration management packet on an RMC or an EoC, and the second mark is carried at a preset location of the configuration management packet; or the foregoing second configuration management message may be an Ethernet packet or an IP packet, and the second mark is a preset VLAN identifier, or a preset MAC address, or a preset IP address that is of the Ethernet packet or the IP packet.

Optionally, in another embodiment, the FTTdp CPE 90 may further include an adding unit 94, configured to add CID information of the FTTdp CPE 90 to a DHCP packet or a PPPoE packet. The sending unit 93 may be configured to send, to the FTTdp CO device, the DHCP packet or the PPPoE packet that carries the CID information of the FTTdp CPE 90.

In this way, for the FTTdp management device, the FTTdp CO device and the FTTdp CPE may be considered as one network element. This configuration and management manner is easily implemented, and efficiency is relatively high.

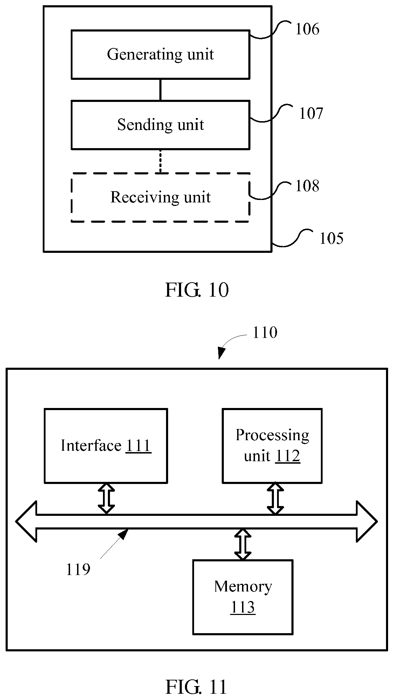

FIG. 10 is a block diagram of an FTTdp management device according to an embodiment of the present invention. An FTTdp management device 105 in FIG. 10 includes a generating unit 106 and a sending unit 107. The FTTdp management device 105 may be a network management system or an OLT device.

The generating unit 106 is configured to generate a first FTTdp device configuration message, where the first FTTdp device configuration message is used to configure FTTdp CPE connected to an FTTdp CO device.

The sending unit 107 is configured to send the first FTTdp device configuration message to the FTTdp CO device.

According to this embodiment of the present invention, an FTTdp management device sends a first FTTdp device configuration message to an FTTdp CO device, and the FTTdp CO device sends, to FTTdp CPE, configuration information that is related to the FTTdp CPE and that is in the first FTTdp device configuration message, so as to implement configuration of the FTTdp CPE by the FTTdp management device.

The FTTdp management device 105 can implement an operation related to the FTTdp management device in the foregoing method embodiment. To avoid repetition, details are not described herein again.

Optionally, in an embodiment, the first FTTdp device configuration message generated by the generating unit 106 may further be used to configure the FTTdp CO device.

Optionally, in another embodiment, the FTTdp management device 105 may further include a receiving unit 108, configured to receive a configuration response message sent by the FTTdp CO device, where the configuration response message carries a result of service configuration executed by the FTTdp CO device and a result of service configuration executed by the FTTdp CPE.

Optionally, in an embodiment, the FTTdp management device 105 may further include a receiving unit 108, configured to receive a register packet sent by the FTTdp CO device, where the register packet carries information about maximum bandwidth negotiated by the FTTdp CO device and the FTTdp CPE.

Optionally, in another embodiment, the foregoing FTTdp device configuration message and configuration response message may be an OMCI message, an OAM message of an EPON, or an Ethernet packet or an IP packet that has a specific Ethernet characteristic. The Ethernet packet or the IP packet that has the specific Ethernet characteristic means that a characteristic of the packet has a specific value, for example, a specific VLAN identifier, a specific MAC address, or a specific IP address.

In this way, for the FTTdp management device, the FTTdp CO device and the FTTdp CPE may be considered as one network element. This configuration and management manner is easily implemented, and efficiency is relatively high.

FIG. 11 is a block diagram of an FTTdp CO device according to another embodiment of the present invention. An FTTdp CO device 110 in FIG. 11 includes an interface 111, a processing unit 112, and a memory 113. The processing unit 112 controls an operation of the FTTdp CO device 110. The memory 113 may include a read-only memory and a random access memory, and provides an instruction and data for the processing unit 112. A part of the memory 113 may further include a nonvolatile random access memory (NVRAM). All components of the FTTdp CO device 110 are coupled together by using a bus system 119, where the bus system 119 further includes a power bus, a control bus, and a status signal bus in addition to a data bus. However, for clarity of description, various buses are marked as the bus system 119 in the figure.

The method disclosed in the foregoing embodiment of the present invention may be applied to the processing unit 112, or implemented by the processing unit 112. During an implementation process, each step of the foregoing method may be completed by means of an integrated logic circuit of hardware in the processing unit 112 or an instruction in software form. The processing unit 112 may be a general purpose processor, a digital signal processor, an application-specific integrated circuit, a field-programmable gate array or another programmable logic device, a discrete gate or a transistor logic device, or a discrete hardware component, which may implement or execute various methods, steps, and logical block diagrams that are disclosed in this embodiment of the present invention. The general purpose processor may be a microprocessor, any conventional processor, or the like. Steps of the method disclosed with reference to this embodiment of the present invention may be directly executed by a hardware processor, or may be executed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 113. The processing unit 112 reads information in the memory 113, and completes the steps of the foregoing method by using the hardware of the processing unit 112.

Specifically, the interface 111 may receive an FTTdp device configuration message sent by an FTTdp management device, where the FTTdp device configuration message is used to configure FTTdp CPE connected to the FTTdp CO device 110.

The memory 113 stores instructions that enable the processing unit 112 to execute the following operations: acquiring, based on a first FTTdp device configuration message, first configuration information used to configure the FTTdp CPE; encapsulating the first configuration information into a first configuration management message, where the first configuration management message includes a first mark, and the first mark is used to enable the FTTdp CPE to identify the first configuration management message.

The interface 111 may further send the first configuration management message to the FTTdp CPE.

According to this embodiment of the present invention, an FTTdp management device sends an FTTdp device configuration message to an FTTdp CO device, and the FTTdp CO device sends, to FTTdp CPE, configuration information that is related to the FTTdp CPE and that is in the FTTdp device configuration message, so as to implement configuration of the FTTdp CPE by the FTTdp management device.

The FTTdp CO device 110 can implement an operation related to the FTTdp CO device in the foregoing method embodiment. To avoid repetition, details are not described herein again.

Optionally, in an embodiment, the first FTTdp device configuration message may further be used to configure the FTTdp CO device. In this case, the processing unit 112 may acquire, based on the first FTTdp device configuration message, second configuration information used to configure the FTTdp CO device, and execute service configuration according to the second configuration information. In this way, according to this embodiment of the present invention, configuration can be implemented by the FTTdp management device on the FTTdp CO device and the FTTdp CPE at the same time, which improves system configuration efficiency.

Optionally, in another embodiment, the foregoing first configuration management message may be a configuration management packet on an RMC or an EoC, and the first mark is carried at a preset location of the configuration management packet; or the foregoing first configuration management message may be an Ethernet packet or an IP packet, and the first mark is a preset VLAN identifier, or a preset MAC address, or a preset IP address that is of the Ethernet packet or the IP packet.

Optionally, in another embodiment, the interface 111 may further be configured to receive a second configuration management message sent by the FTTdp CPE, where the second configuration management message carries a result of service configuration executed by the FTTdp CPE according to the first configuration information in the first configuration management message. The second configuration management message further includes a second mark, where the second mark is used to enable the FTTdp CO device 110 to identify the second configuration management message.

Similarly, the foregoing second configuration management message may be a configuration management packet on an RMC or an EoC, and the second mark is carried at a preset location of the configuration management packet; or the foregoing second configuration management message may be an Ethernet packet or an IP packet, and the second mark is a preset VLAN identifier, or a preset MAC address, or a preset IP address that is of the Ethernet packet or the IP packet.

Optionally, in another embodiment, the interface 111 may further be configured to send a configuration response message to the FTTdp management device, where the configuration response message carries a result of service configuration executed by the FTTdp CPE and a result of service configuration executed by the FTTdp CO device 110 (specifically, the processing unit 112).

Optionally, in another embodiment, the interface 111 may further be configured to send a register packet to the FTTdp management device, where the register packet carries information about maximum bandwidth negotiated by the FTTdp CO device 110 and the FTTdp CPE.

Optionally, in another embodiment, the interface 111 may further be configured to receive a DHCP packet or a PPPoE packet that is sent by the FTTdp CPE, where the DHCP packet or the PPPoE packet carries CID information of the FTTdp CPE. The processing unit 112 may add CID information of the FTTdp CO device 110 to the DHCP packet or the PPPoE packet. The interface 111 may further be configured to send, to the FTTdp management device, the DHCP packet or the PPPoE packet that carries the CID information of the FTTdp CO device 110 and the CID information of the FTTdp CPE.

Optionally, in another embodiment, the foregoing FTTdp device configuration message or configuration response message may be an OMCI message, an OAM message of an EPON, or an Ethernet packet or an IP packet that has a specific Ethernet characteristic.

In this way, for the FTTdp management device, the FTTdp CO device and the FTTdp CPE may be considered as one network element. This configuration and management manner is easily implemented, and efficiency is relatively high.

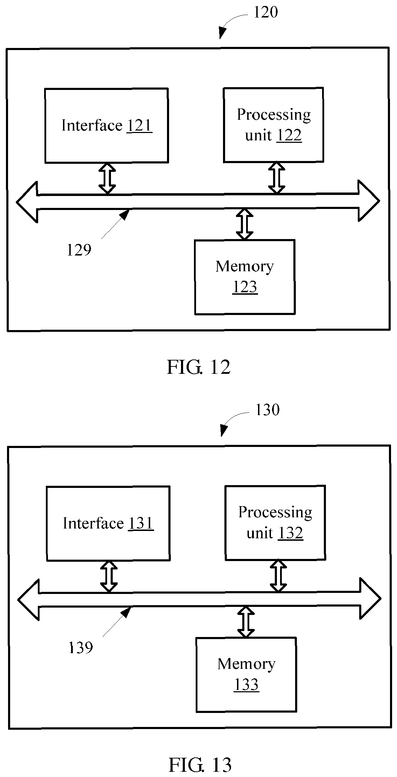

FIG. 12 is a block diagram of FTTdp CPE according to an embodiment of the present invention. FTTdp CPE 120 in FIG. 12 includes an interface 121, a processing unit 122, and a memory 123. The processing unit 122 controls an operation of the FTTdp CPE 120. The memory 123 may include a read-only memory and a random access memory, and provides an instruction and data for the processing unit 122. A part of the memory 123 may further include a nonvolatile random access memory (NVRAM). All components of the FTTdp CPE 120 are coupled together by using a bus system 129, where the bus system 129 further includes a power bus, a control bus, and a status signal bus in addition to a data bus. However, for clarity of description, various buses are marked as the bus system 129 in the figure.

The method disclosed in the foregoing embodiment of the present invention may be applied to the processing unit 122, or implemented by the processing unit 122. During an implementation process, each step of the foregoing method may be completed by means of an integrated logic circuit of hardware in the processing unit 122 or an instruction in software form. The processing unit 122 may be a general purpose processor, a digital signal processor, an application-specific integrated circuit, a field-programmable gate array or another programmable logic device, a discrete gate or a transistor logic device, or a discrete hardware component, which may implement or execute various methods, steps, and logical block diagrams that are disclosed in this embodiment of the present invention. The general purpose processor may be a microprocessor, any conventional processor, or the like. Steps of the method disclosed with reference to this embodiment of the present invention may be directly executed by a hardware processor, or may be executed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 123. The processing unit 122 reads information in the memory 123, and completes the steps of the foregoing method by using the hardware of the processing unit 122.

Specifically, the interface 121 may receive a first configuration management message sent by an FTTdp CO device, where the first configuration management message includes a first mark, the first mark is used to enable the FTTdp CPE 120 to identify the first configuration management message, and the first configuration management message further includes first configuration information used to configure the FTTdp CPE 120.

The memory 123 stores an instruction that enables the processing unit 122 to execute configuration according to the first configuration information.

According to this embodiment of the present invention, an FTTdp management device sends an FTTdp device configuration message to an FTTdp CO device, and the FTTdp CO device sends, to FTTdp CPE, configuration information that is related to the FTTdp CPE and that is in the FTTdp device configuration message, so as to implement configuration of the FTTdp CPE by the FTTdp management device.

The foregoing first configuration management message is obtained by encapsulating the first configuration information after the FTTdp CO device acquires, based on the FTTdp device configuration message sent by the FTTdp management device, the first configuration information used to configure the FTTdp CPE. The foregoing FTTdp device configuration message may be used to configure both the FTTdp CO device and the FTTdp CPE, or may be used to configure only the FTTdp CPE.

The FTTdp CPE 120 can implement an operation related to the FTTdp CPE in the foregoing method embodiment. To avoid repetition, details are not described herein again.

Optionally, in an embodiment, the foregoing first configuration management message may be a configuration management packet on an RMC or an EoC, and the first mark is carried at a preset location of the configuration management packet; or the foregoing first configuration management message may be an Ethernet packet or an IP packet, and the first mark is a preset VLAN identifier, or a preset MAC address, or a preset IP address that is of the Ethernet packet or the IP packet.

Optionally, in another embodiment, the interface 121 may further send a second configuration management message to the FTTdp CO device, where the second configuration management message carries a result of service configuration executed by the FTTdp CPE 120 (specifically, the processing unit 122) according to the first configuration information. The second configuration management message further includes a second mark, where the second mark is used to enable the FTTdp CO device to identify the second configuration management message.

Similarly, the foregoing second configuration management message may be a configuration management packet on an RMC or an EoC, and the second mark is carried at a preset location of the configuration management packet; or the foregoing second configuration management message may be an Ethernet packet or an IP packet, and the second mark is a preset VLAN identifier, or a preset MAC address, or a preset IP address that is of the Ethernet packet or the IP packet.

Optionally, in another embodiment, the processing unit 122 may further add CID information of the FTTdp CPE 120 to a DHCP packet or a PPPoE packet. The interface 121 may send, to the FTTdp CO device, the DHCP packet or the PPPoE packet that carries the CID information of the FTTdp CPE 120.

In this way, for the FTTdp management device, the FTTdp CO device and the FTTdp CPE may be considered as one network element. This configuration and management manner is easily implemented, and efficiency is relatively high.

FIG. 13 is a block diagram of an FTTdp management device according to an embodiment of the present invention. An FTTdp management device 130 in FIG. 13 includes an interface 131, a processing unit 132, and a memory 133. The processing unit 132 controls an operation of the FTTdp management device 130. The memory 133 may include a read-only memory and a random access memory, and provides an instruction and data for the processing unit 132. A part of the memory 133 may further include a nonvolatile random access memory (NVRAM). All components of the FTTdp management device 130 are coupled together by using a bus system 139, where the bus system 139 further includes a power bus, a control bus, and a status signal bus in addition to a data bus. However, for clarity of description, various buses are marked as the bus system 139 in the figure.

The method disclosed in the foregoing embodiment of the present invention may be applied to the processing unit 132, or implemented by the processing unit 132. During an implementation process, each step of the foregoing method may be completed by means of an integrated logic circuit of hardware in the processing unit 132 or an instruction in software form. The processing unit 132 may be a general purpose processor, a digital signal processor, an application-specific integrated circuit, a field-programmable gate array or another programmable logic device, a discrete gate or a transistor logic device, or a discrete hardware component, which may implement or execute various methods, steps, and logical block diagrams that are disclosed in this embodiment of the present invention. The general purpose processor may be a microprocessor, any conventional processor, or the like. Steps of the method disclosed with reference to this embodiment of the present invention may be directly executed by a hardware processor, or may be executed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 133. The processing unit 132 reads information in the memory 133, and completes the steps of the foregoing method by using the hardware of the processing unit 132.

Specifically, the memory 133 may store an instruction that enables the processing unit 132 to generate an FTTdp device configuration message, where the FTTdp device configuration message is used to configure FTTdp CPE connected to an FTTdp CO device.

The interface 131 may send the FTTdp device configuration message to the FTTdp CO device.

According to this embodiment of the present invention, an FTTdp management device sends an FTTdp device configuration message to an FTTdp CO device, and the FTTdp CO device sends, to FTTdp CPE, configuration information that is related to the FTTdp CPE and that is in the FTTdp device configuration message, so as to implement configuration of the FTTdp CPE by the FTTdp management device.

The FTTdp management device 130 may be a network management system or an OLT device.

The FTTdp management device 130 can implement an operation related to the FTTdp management device in the foregoing method embodiment. To avoid repetition, details are not described herein again.

Optionally, in an embodiment, a first FTTdp device configuration message is further used to configure the FTTdp CO device.

Optionally, in another embodiment, the interface 131 may further receive a configuration response message sent by the FTTdp CO device, where the configuration response message carries a result of service configuration executed by the FTTdp CO device and a result of service configuration executed by the FTTdp CPE.

Optionally, in another embodiment, the interface 131 may further receive a register packet sent by the FTTdp CO device, where the register packet carries information about maximum bandwidth negotiated by the FTTdp CO device and the FTTdp CPE.

Optionally, in another embodiment, the foregoing FTTdp device configuration message and configuration response message may be an OMCI message, an OAM message of an EPON, or an Ethernet packet or an IP packet that has a specific Ethernet characteristic. The Ethernet packet or the IP packet that has the specific Ethernet characteristic means that a characteristic of the packet has a specific value, for example, a specific VLAN identifier, a specific MAC address, or a specific IP address.

In this way, for the FTTdp management device, the FTTdp CO device and the FTTdp CPE may be considered as one network element. This configuration and management manner is easily implemented, and efficiency is relatively high.

A communications system according to an embodiment of the present invention may include the foregoing FTTdp management device 105/130, FTTdp CO device 80/110, and FTTdp CPE 90/120.

Persons of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A communication method of a fiber-to-the-distribution point, FTTdp, central office, CO, device, comprising:
receiving (201), by the FTTdp CO device, a first FTTdp device configuration message sent by an FTTdp management device, wherein the first FTTdp device configuration message is used to configure an FTTdp customer premise equipment, CPE, connected to the FTTdp CO device;
acquiring (202), by the FTTdp CO device and based on the first FTTdp device configuration message, first configuration information used to configure the FTTdp CPE;
encapsulating (203), by the FTTdp CO device, the first configuration information into a first configuration management message, wherein the first configuration management message comprises a first mark, and the first mark is used to enable the FTTdp CPE to identify the first configuration management message; and
sending (204), by the FTTdp CO device, the first configuration management message to the FTTdp CPE;
wherein
the first configuration management message is an Ethernet packet or an Internet Protocol, IP, packet, and the first mark is a preset virtual local area network, VLAN, identifier or a preset Media Access Control, MAC, address or an IP address that is of the Ethernet packet or the IP packet.

2. The method according to claim 1, wherein the first FTTdp device configuration message is further used to configure the FTTdp CO device, and the method further comprises:
acquiring, by the FTTdp CO device and based on the first FTTdp device configuration message, second configuration information used to configure the FTTdp CO device; and
executing, by the FTTdp CO device, service configuration according to the second configuration information.

3. The method according to any one of claims 1 to 2, further comprising:
receiving, by the FTTdp CO device, a second configuration management message sent by the FTTdp CPE, wherein the second configuration management message carries a result of service configuration executed by the FTTdp CPE according to the first configuration information in the first configuration management message, and
the second configuration management message further comprises a second mark, wherein the second mark is used to enable the FTTdp CO device to identify the second configuration management message.

4. A communication method of a fiber-to-the-distribution point, FTTdp, customer premise equipment, CPE, comprising:
receiving (301), by the FTTdp CPE, a first configuration management message sent by an FTTdp central office, CO, device, wherein the first configuration management message comprises a first mark, the first mark is used to enable the FTTdp CPE to identify the first configuration management message, and the first configuration management message further comprises first configuration information used to configure the FTTdp CPE; and
executing (302), by the FTTdp CPE, service configuration according to the first configuration information;
wherein
the first configuration management message is an Ethernet packet or an Internet Protocol, IP, packet, and the first mark is a preset virtual local area network, VLAN, identifier or a preset Media Access Control, MAC, address or a preset IP address that is of the Ethernet packet or the IP packet.

5. The method according to claim 4, further comprising:
sending, by the FTTdp CPE, a second configuration management message to the FTTdp CO device, wherein the second configuration management message carries a result of the service configuration executed by the FTTdp CPE according to the first configuration information, and
the second configuration management message further comprises a second mark, wherein the second mark is used to enable the FTTdp CO device to identify the second configuration management message.

6. A fiber-to-the-distribution point, FTTdp, central office, CO, device, comprising:
a receiving unit (81), configured to receive a first FTTdp device configuration message sent by an FTTdp management device, wherein the first FTTdp device configuration message is used to configure an FTTdp customer premise equipment, CPE, connected to the FTTdp CO device;
an acquiring unit (82), configured to acquire, based on the first FTTdp device configuration message, first configuration information used to configure the FTTdp CPE;
an encapsulation unit (83), configured to encapsulate the first configuration information into a first configuration management message, wherein the first configuration management message comprises a first mark, and the first mark is used to enable the FTTdp CPE to identify the first configuration management message; and
a sending unit (84), configured to send the first configuration management message to the FTTdp CPE;
wherein
the first configuration management message is an Ethernet packet or an Internet Protocol ,IP, packet, and the first mark is a preset virtual local area network ,VLAN, identifier or a preset Media Access Control, MAC, address or an IP address that is of the Ethernet packet or the IP packet.

7. The FTTdp central office device according to claim 6, wherein the first FTTdp device configuration message received by the receiving unit is further used to configure the FTTdp central office device, and the fiber-to-the-distribution point central office device further comprises a configuration unit, configured to execute service configuration according to the second configuration information.

## Patentansprüche

1. Kommunikationsverfahren einer Faser-zu-Verteilungspunkt(FTTdp)-Vermittlungsstellen(CO)-Vorrichtung, die Folgendes umfasst:
Empfangen (201) durch die FTTdp-CO-Vorrichtung einer ersten FTTdp-Vorrichtungsauslegungsnachricht, die von einer FTTdp-Verwaltungsvorrichtung gesendet wurde, wobei die erste FTTdp-Vorrichtungsauslegungsnachricht verwendet wird, um eine FTTdp-Kundenstandorteinrichtung, CPE, die mit der FTTdp-CO-Vorrichtung verbunden ist, auszulegen;
Erfassen (202) durch die FTTdp-CO-Vorrichtung und auf Basis der ersten FTTdp-Vorrichtungsauslegungsnachricht erster Auslegungsinformationen, die zum Auslegen der FTTdp-CPE verwendet werden;
Kapseln (203) durch die FTTdp-CO-Vorrichtung der ersten Auslegungsinformationen in einer ersten Auslegungsverwaltungsnachricht, wobei die erste Auslegungsverwaltungsnachricht eine erste Markierung umfasst und die erste Markierung verwendet wird, um es der FTTdp-CPE zu ermöglichen, die erste Auslegungsverwaltungsnachricht zu identifizieren; und
Senden (204) durch die FTTdp-CO-Vorrichtung der ersten Auslegungsverwaltungsnachricht an die FTTdp-CPE;
wobei
die erste Auslegungsverwaltungsnachricht ein Ethernetpaket oder ein Internetprotokoll(IP)-Paket ist und die erste Markierung eine voreingestellte virtuelle lokale Netzwerk(VLAN)-Kennung oder eine voreingestellte Medienzugangssteuerungs(MAC)-Adresse oder eine IP-Adresse, die zum Ethernetpaket oder zum IP-Paket gehört, ist.

2. Verfahren nach Anspruch 1, wobei die erste FTTdp-Vorrichtungsauslegungsnachricht ferner verwendet wird, um die FTTdp-CO-Vorrichtung auszulegen, und das Verfahren ferner Folgendes umfasst:
Erfassen durch die FTTdp-CO-Vorrichtung und auf Basis der ersten FTTdp-Vorrichtungsauslegungsnachricht zweiter Auslegungsinformationen, die zum Auslegen der FTTdp-CO-Vorrichtung verwendet werden; und
Ausführen durch die FTTdp-CO-Vorrichtung einer Dienstauslegung gemäß den zweiten Auslegungsinformationen.

3. Verfahren nach einem der Ansprüche 1 bis 2, das ferner Folgendes umfasst:
Empfangen durch die FTTdp-CO-Vorrichtung einer zweiten Auslegungsverwaltungsnachricht, die von der FTTdp-CPE gesendet wurde, wobei die zweite Auslegungsverwaltungsnachricht ein Ergebnis einer Dienstauslegung beinhaltet, die von der FTTdp-CPE gemäß den ersten Auslegungsinformationen in der ersten Auslegungsverwaltungsnachricht ausgeführt wurde, und
die zweite Auslegungsverwaltungsnachricht ferner eine zweite Markierung umfasst, wobei die zweite Markierung verwendet wird, um es der FTTdp-CO-Vorrichtung zu ermöglichen, die zweite Auslegungsverwaltungsnachricht zu identifizieren.

4. Kommunikationsverfahren einer Faser-zu-Verteilungspunkt(FTTdp)-Kundenstandorteinrichtung, CPE, die Folgendes umfasst:
Empfangen (301) durch die FTTdp-CPE einer ersten Auslegungsverwaltungsnachricht, die von einer FTTdp-Vermittlungsstellen(CO)-Vorrichtung gesendet wurde, wobei die erste Auslegungsverwaltungsnachricht eine erste Markierung umfasst, die erste Markierung verwendet wird, um es der FTTdp-CPE zu ermöglichen, die erste Auslegungsverwaltungsnachricht zu identifizieren, und die erste Auslegungsverwaltungsnachricht ferner erste Auslegungsinformationen umfasst, die zum Auslegen der FTTdp-CPE verwendet werden; und
Ausführen (302) durch die FTTdp-CPE einer Dienstauslegung gemäß den ersten Auslegungsinformationen;
wobei
die erste Auslegungsverwaltungsnachricht ein Ethernetpaket oder ein Internetprotokoll(IP)-Paket ist und die erste Markierung eine voreingestellte virtuelle lokale Netzwerk(VLAN)-Kennung oder eine voreingestellte Medienzugangssteuerungs(MAC)-Adresse oder eine voreingestellte IP-Adresse, die zum Ethernetpaket oder zum IP-Paket gehört, ist.

5. Verfahren nach Anspruch 4, das ferner Folgendes umfasst:
Senden durch die FTTdp-CPE einer zweiten Auslegungsverwaltungsnachricht an die FTTdp-CO-Vorrichtung, wobei die zweite Auslegungsverwaltungsnachricht ein Ergebnis der Dienstauslegung beinhaltet, die von der FTTdp-CPE gemäß den ersten Auslegungsinformationen ausgeführt wurde, und
die zweite Auslegungsverwaltungsnachricht ferner eine zweite Markierung umfasst, wobei die zweite Markierung verwendet wird, um es der FTTdp-CO-Vorrichtung zu ermöglichen, die zweite Auslegungsverwaltungsnachricht zu identifizieren.

6. Faser-zu-Verteilungspunkt(FTTdp)-Vermittlungsstellen(CO)-Vorrichtung, die Folgendes umfasst:
eine Empfangseinheit (81), die dazu ausgelegt ist, eine erste FTTdp-Vorrichtungsauslegungsnachricht zu empfangen, die von einer FTTdp-Verwaltungsvorrichtung gesendet wurde, wobei die erste FTTdp-Vorrichtungsauslegungsnachricht verwendet wird, um eine FTTdp-Kundenstandorteinrichtung, CPE, die mit der FTTdp-CO-Vorrichtung verbunden ist, auszulegen;
eine Erfassungseinheit (82), die dazu ausgelegt ist, auf Basis der ersten FTTdp-Vorrichtungsauslegungsnachricht erste Auslegungsinformationen, die zum Auslegen der FTTdp-CPE verwendet werden, zu erfassen;
eine Kapselungseinheit (83), die dazu ausgelegt ist, die ersten Auslegungsinformationen in einer ersten Auslegungsverwaltungsnachricht zu kapseln, wobei die erste Auslegungsverwaltungsnachricht eine erste Markierung umfasst und die erste Markierung verwendet wird, um es der FTTdp-CPE zu ermöglichen, die erste Auslegungsverwaltungsnachricht zu identifizieren; und
eine Sendeeinheit (84), die dazu ausgelegt ist, die erste Auslegungsverwaltungsnachricht an die FTTdp-CPE zu senden;
wobei
die erste Auslegungsverwaltungsnachricht ein Ethernetpaket oder ein Internetprotokoll(IP)-Paket ist und die erste Markierung eine voreingestellte virtuelle lokale Netzwerk(VLAN)-Kennung oder eine voreingestellte Medienzugangssteuerungs(MAC)-Adresse oder eine IP-Adresse, die zum Ethernetpaket oder zum IP-Paket gehört, ist.

7. FTTdp-Vermittlungsstellenvorrichtung nach Anspruch 6, wobei die erste FTTdp-Vorrichtungsauslegungsnachricht, die von der Empfangseinheit empfangen wurde, ferner verwendet wird, um die FTTdp-Vermittlungsstellenvorrichtung auszulegen, und die Faser-zu-Verteilungspunkt-Vermittlungsstellenvorrichtung ferner eine Auslegungseinheit umfasst, die dazu ausgelegt ist, eine Dienstauslegung gemäß den zweiten Auslegungsinformationen auszuführen.

## Revendications

1. Procédé de communication d'un dispositif de central téléphonique, CO, à fibre jusqu'au point de distribution, FTTdp, comprenant :
la réception (201), par le dispositif CO FTTdp, d'un premier message de configuration de dispositif FTTdp envoyé par un dispositif de gestion FTTdp, le premier message de configuration de dispositif FTTdp étant utilisé pour configurer un équipement d'abonné, CPE, FTTdp relié au dispositif CO FTTdp ;
l'acquisition (202), par le dispositif CO FTTdp et sur la base du premier message de configuration de dispositif FTTdp, de premières informations de configuration utilisées pour configurer le CPE FTTdp ;
l'encapsulation (203), par le dispositif CO FTTdp, des premières informations de configuration dans un premier message de gestion de configuration, le premier message de gestion de configuration comprenant une première marque, et la première marque étant utilisée pour permettre au CPE FTTdp d'identifier le premier message de gestion de configuration ; et
l'envoi (204), par le dispositif CO FTTdp, du premier message de gestion de configuration au CPE FTTdp ;
dans lequel
le premier message de gestion de configuration est un paquet Ethernet ou un paquet en protocole Internet, IP, et la première marque est un identifiant de réseau local virtuel, VLAN, prédéfini ou une adresse de contrôle d'accès au support, MAC, prédéfinie ou une adresse IP qui appartient au paquet Ethernet ou au paquet IP.

2. Procédé selon la revendication 1, le premier message de configuration de dispositif FTTdp étant également utilisé pour configurer le dispositif CO FTTdp, et le procédé comprenant en outre :
l'acquisition, par le dispositif CO FTTdp et sur la base du premier message de configuration de dispositif FTTdp, de deuxièmes informations de configuration utilisées pour configurer le dispositif CO FTTdp ; et
l'exécution, par le dispositif CO FTTdp, d'une configuration de service en fonction des deuxièmes informations de configuration.

3. Procédé selon l'une quelconque des revendications 1 à 2, comprenant en outre :
la réception, par le dispositif CO FTTdp, d'un deuxième message de gestion de configuration envoyé par le CPE FTTdp, le deuxième message de gestion de configuration transportant un résultat de configuration de service exécutée par le CPE FTTdp en fonction des premières informations de configuration dans le premier message de gestion de configuration, et
le deuxième message de gestion de configuration comprend en outre une deuxième marque, la deuxième marque étant utilisée pour permettre au dispositif CO FTTdp d'identifier le deuxième message de gestion de configuration.

4. Procédé de communication d'un équipement d'abonné, CPE, à fibre jusqu'au point de distribution, FTTdp, comprenant :
la réception (301), par le CPE FTTdp, d'un premier message de gestion de configuration envoyé par un dispositif de central téléphonique, CO, FTTdp, le premier message de gestion de configuration comprenant une première marque, la première marque étant utilisée pour permettre au CPE FTTdp d'identifier le premier message de gestion de configuration, et le premier message de gestion de configuration comprenant en outre des premières informations de configuration utilisées pour configurer le CPE FTTdp ; et
l'exécution (302), par le CPE FTTdp, d'une configuration de service en fonction des premières informations de configuration ;
dans lequel
le premier message de gestion de configuration est un paquet Ethernet ou un paquet en protocole Internet, IP, et la première marque est un identifiant de réseau local virtuel, VLAN, prédéfini ou une adresse de contrôle d'accès au support, MAC, prédéfinie ou une adresse IP prédéfinie qui appartient au paquet Ethernet ou au paquet IP.

5. Procédé selon la revendication 4, comprenant en outre :
l'envoi, par le CPE FTTdp, d'un deuxième message de gestion de configuration au dispositif CO FTTdp, le deuxième message de gestion de configuration transportant un résultat de la configuration de service exécutée par le CPE FTTdp en fonction des premières informations de configuration, et
le deuxième message de gestion de configuration comprenant en outre une deuxième marque, la deuxième marque étant utilisée pour permettre au dispositif CO FTTdp d'identifier le deuxième message de gestion de configuration.

6. Dispositif de central téléphonique, CO, à fibre jusqu'au point de distribution, FTTdp, comprenant :
une unité de réception (81), configurée pour recevoir un premier message de configuration de dispositif FTTdp envoyé par un dispositif de gestion FTTdp, le premier message de configuration de dispositif FTTdp étant utilisé pour configurer un équipement d'abonné, CPE, FTTdp relié au dispositif CO FTTdp ;
une unité d'acquisition (82), configurée pour acquérir, sur la base du premier message de configuration de dispositif FTTdp, des premières informations de configuration utilisées pour configurer le CPE FTTdp ;
une unité d'encapsulation (83), configurée pour encapsuler les premières informations de configuration dans un premier message de gestion de configuration, le premier message de gestion de configuration comprenant une première marque, et la première marque étant utilisée pour permettre au CPE FTTdp d'identifier le premier message de gestion de configuration ; et
une unité d'envoi (84), configurée pour envoyer le premier message de gestion de configuration au CPE FTTdp ;
dans lequel
le premier message de gestion de configuration est un paquet Ethernet ou un paquet en protocole Internet, IP, et la première marque est un identifiant de réseau local virtuel, VLAN, prédéfini ou une adresse de contrôle d'accès au support, MAC, prédéfinie ou une adresse IP qui appartient au paquet Ethernet ou au paquet IP.

7. Dispositif de central téléphonique FTTdp selon la revendication 6, le premier message de configuration de dispositif FTTdp reçu par l'unité de réception étant également utilisé pour configurer le dispositif de central téléphonique FTTdp, et le dispositif de central téléphonique à fibre jusqu'au point de distribution comprenant en outre une unité de configuration, configurée pour exécuter une configuration de service en fonction des deuxièmes informations de configuration.
